# EUROPEAN PATENT SPECIFICATION

(11) **EP 1 905 525 B1**
(45) Date of publication and mention of the grant of the patent: **02.12.2009**
(21) Application number: 07115167.4
(22) Date of filing: 29.08.2007
(51) Int. Cl.: B23D 47/12, B27B 5/065

(54) **A panel saw machine for panels made of wood or similar materials.**
Plattenaufteilsäge zur Bearbeitung von Platten aus Holz oder ähnlichem
Machine de scie à panneau pour panneaux en bois ou matériaux similaires

(30) Priority: 29.09.2006 IT BO20060673
(43) Date of publication of application: 02.04.2008
(73) Proprietor: GIBEN INTERNATIONAL S.p.A., 40065 Pianoro (Bologna) (IT)
(72) Inventor: BENUZZI, Piergiorgio, 40141, BOLOGNA (IT)
(74) Representative: Lanzoni, Luciano

(56) References cited:
- EP-A- 0 768 144
- EP-A- 1 362 656
- GB-A- 1 232 800
- US-A- 1 763 478
- US-A- 1 826 222

## Description

This invention relates to a panel saw machine according to the preamble of claim 1 for panels made of wood or similar materials.

Such a panel saw machine is disclosed by EP 1 362 656 A1.

At present, panel saw machines essentially comprise:
- a main frame comprising a first horizontal table;
- means for advancing the panels along a defined feed line and usually consisting of a crossbar mobile in parallel along said first horizontal table and equipped with clamps used for gripping the panel or panels to be sawn;
- a straight cutting unit transversal to the feed line and comprising a beam that mounts one or two hold-down bars for pressing down on the panels, and a carriage, positioned near the beam and equipped with at least one mobile circular blade designed to cut the panels along a line transversal to the beam and usually passing between the hold-down bars;
- a second table, positioned in front of the cutting unit, downstream of the cutting unit relative to the panel feed line on the first horizontal table, for supporting the panels and/or the respective panel lengths obtained by cutting.

Over time, these panel saw machines have been continually improved in all the parts described above in order to increase productivity, enhance panel cutting quality and make machine operation safer.

Thus, if on the one hand targets of high quality have been achieved, on the other, machine purchase and maintenance costs have risen proportionately. In practice, increased costs have restricted the range of potential machine buyers to companies with high productivity requirements that can quickly amortise the high initial cost of the machines, while individual craftsmen, one-person concerns and medium- to low-productivity companies cannot in most cases afford to buy machines of this kind.

For example, the above mentioned blade unit or carriage, which this specification refers to in particular, usually consists of a mobile unit or carriage that mounts the main blade and, normally, a smaller blade known as "scoring blade". The two blades protrude from a slot made in the first horizontal table.

The carriage is usually driven by a motor which enables it to move along the cutting axis, transversal to the feed line, and mounts at least one other motor to drive the main and scoring blades.

In addition to that, the carriage must be equipped with a motor-driven system for adjusting the height of the blades relative to the first horizontal table in accordance with the thickness and number of panels to be cut.

This structure, in its entirety, makes the carriage extremely heavy which means, in turn, that it requires a suitably sized mounting base made from metal fabrications with high-strength guides and a plurality of machined features to allow the passage of cables and conduits for power and air supply lines (to release the blade and extract sawdust) along the whole cutting front.

As a result, this structure is extremely expensive, takes a very long time to assemble and, especially for the electrical and air systems, requires frequent maintenance which must be carried out by specialised personnel and which increases the overall cost of running the machine.

The aim of this invention is therefore to overcome the above mentioned disadvantages by providing a panel saw machine for panels made of wood or similar materials having an extremely compact, lightweight, reliable and inexpensive blade unit with a mounting and drive structure that is simple and practical so as to reduce the assembly and maintenance costs of the blade unit.

According to the invention, this aim is achieved by a panel saw machine according to claim 1.

The technical features of the invention, with reference to the above aims, are clearly described in claim 1below and its advantages are more apparent from the detailed description which follows, with reference to the accompanying drawings which illustrate a preferred embodiment of the invention provided merely by way of example without restricting the scope of the appended claims, and in which:
- Figure 1 is a schematic top plan view of a panel saw machine according to the invention, for panels made of wood or similar materials;
- Figure 2 illustrates the panel saw machine of Figure 1 in a schematic front view from P, with some parts cut away in order to better illustrate others;
- Figure 3 is a scaled-up front view of a detail P1 from Figure 2, showing the blade carriage;
- Figure 4 is a partial cutaway of the panel saw machine according to the invention, viewed from P2 in Figure 2;
- Figure 5 is a detail from Figure 2, showing a blade carriage in a different operating configuration.

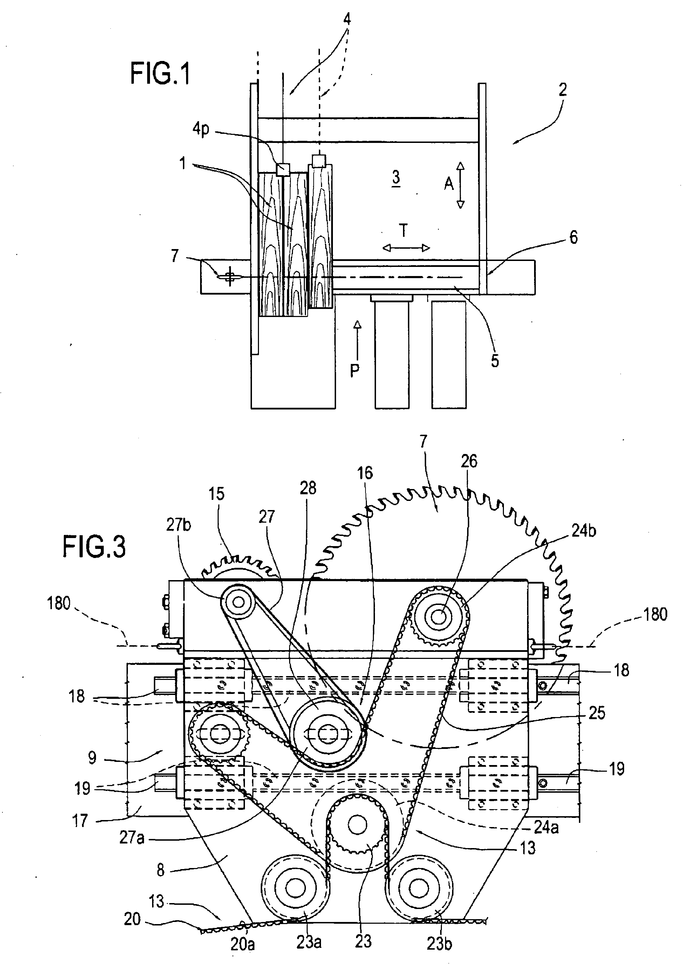

With reference to the accompanying drawings, in particular Figure 1, the panel saw machine according to the invention is used for cutting panels 1 made of wood or similar materials.

This panel saw machine, labelled 2 in its entirety, essentially comprises:
- a horizontal table 3 for supporting the panels 1;
- means 4 for advancing the panels 1 along a feed line A and mobile in a direction parallel to and along the horizontal table 3 (illustrated schematically with gripper clamps 4p, being of customary type and not strictly relevant to this invention;
- a straight cutting unit 5 transversal to the feed line A and comprising at least one base 10, presser means 6 for holding down the panels 1, and a first saw blade 7 positioned close to the presser means 6, mobile in both directions and protruding lengthways from a slot made in the horizontal table 3 in such a way as to cut the panels 1 along a line T transversal to the feed line A.

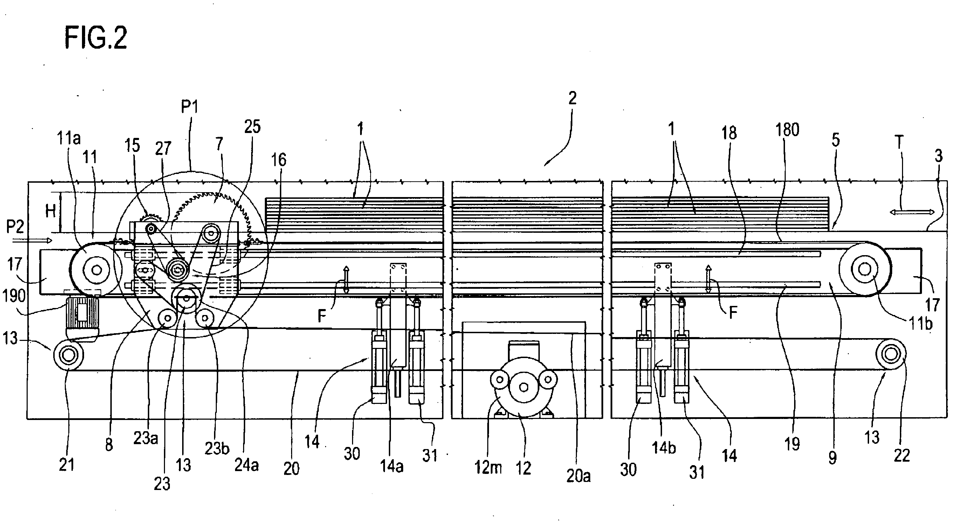

As illustrated in Figures 2 to 4, the cutting unit 5 comprises:
- a carriage 8 which rotatably mounts the first blade 7 and which is slidably constrained to adjustable horizontal guide means 9 associated with the mounting base 10 defined by a vertical wall 10;
- first means 11 for driving the carriage 8, designed to allow the carriage 8 to move in both directions along the transversal line T;
- second means 12 for driving the first blade 7, mounted under the horizontal table 3, associated with the mounting wall 10 and kinematically connected, through first drive transmission means 13, to the first blade 7 in such a way as to enable the first blade 7 to rotate continuously independently of its position along the transversal cutting line T.

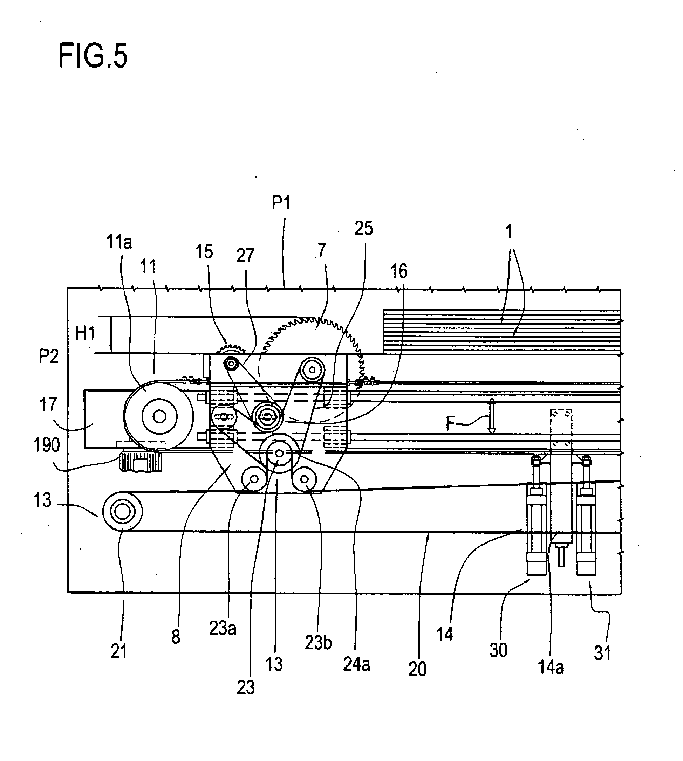

In addition, (see Figures 2, 4 and 5), the cutting unit 5 further comprises means 14 for supporting and adjusting the height H - H1 of the blade 7 relative to the horizontal table 3, said means being positioned on the mounting wall 10 and acting on the adjustable guide means 9 in such a way as to vertically adjust the guide means 9 themselves and the carriage 8 in both directions (see arrows F in Figures 2 and 5).

Again with reference to Figures 2 and 3, the carriage 8 may have rotatably mounted on it a second blade 15, or scoring blade, positioned alongside the first, main blade 7, and connected to the second drive means 12 through second drive transmission means 16 in turn connected to the above mentioned first drive transmission means 13 and mounted on the carriage 8.

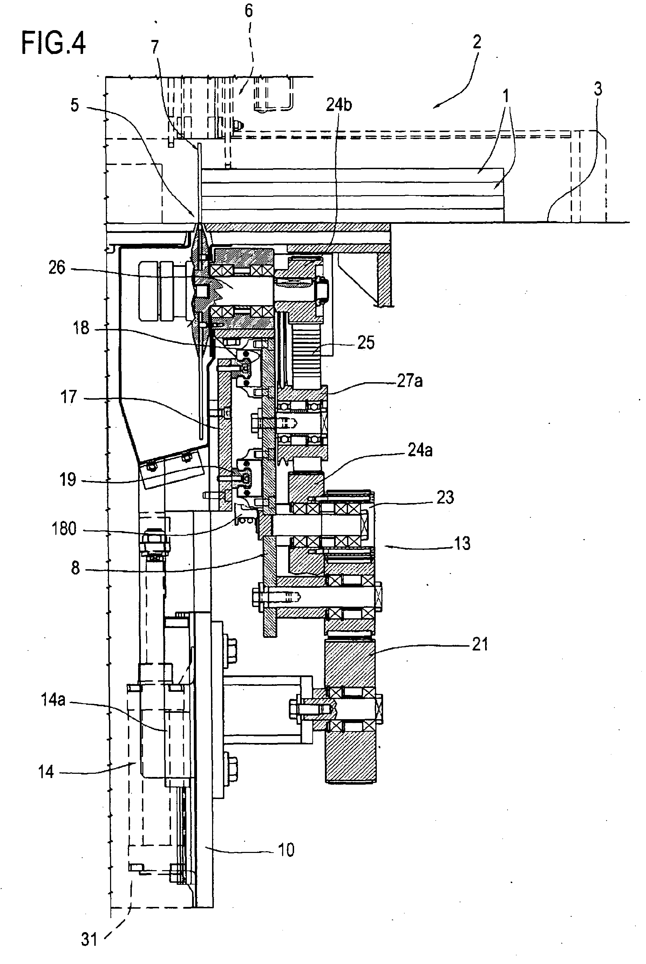

Looking more closely at the technical details (see Figures 2 and 4) the aforementioned guide means 9 comprise a horizontal plate 17 provided with a pair of horizontal guides 18 and 19 to which the carriage 8 is slidably constrained.

The first drive means 11 comprise a pair of first pulleys 11a and 11b, mounted at the respective ends of the cutting unit 5 and rotatably constrained to the horizontal plate 17.

Trained around the pair of first pulleys 11a and 11b there is a first endless belt 180 for driving the carriage 8 and associated, at its free ends, with the carriage 8 itself.

Further, the pulley labelled 11a is connected to a respective first drive unit 190 (for example, a customary geared motor) for driving the pulleys 11a and 11b and, hence, the carriage 8 by pushing and/or pulling.

The aforementioned second means 12 for driving the two blades 7 and 15 comprise a second drive unit 12m mounted close to the mounting wall 10 (positioned on a tread surface under the table 3) and used to drive a second endless belt or cable 20 (preferably of steel) trained around at least one second pair of pulleys 21 and 22 rotatably associated with the ends of the wall 10 in such a way that the sections of the second belt 20 are positioned at least along the full extent of the cutting unit 5.

It should be underlined that the belts or cables described in this text and illustrated in the accompanying drawings may be of any kind, that is to say, toothed belts, flat belts, Vee belts or cables made of any material, without thereby restricting the scope of the claims.

The upper section 20a of the second belt 20 is engaged with the first drive transmission means 13 positioned on the carriage 8 in order to drive the first blade 7 independently of the movement and position of the carriage 8 along the cutting unit 5.

More specifically, the first drive transmission means 13 (see Figure 3) comprise at least one third pulley 23 which is rotatably associated with the carriage 8 and engaged by the upper section 20a of the second belt 20.

The third pulley 23 is coaxially keyed to one of a fourth pair of pulleys 24a and 24b with a third endless belt 25 trained around them; the other fourth pulley 24b is coaxially keyed to a shaft 26 that mounts the first blade 7 and rotationally drives the latter by transmitting the motion derived from the third pulley 23.

The above mentioned second transmission means 16 may comprise a fourth endless belt 27 trained around a fifth pair of pulleys 27a and 27b, one of which is coaxially keyed to the second blade 15. The fifth pulley 27a is rotatably keyed to the carriage 8 in a position such that it engages, by means of a sixth pulley 28 coaxial with and connected to the fifth pulley 27a, a section of the third belt 25 that drives the first blade 7 in such a way as to simultaneously also rotate the second blade 15.

The aforementioned means 14 for adjusting the height H of the first blade 7 may comprise at least one pair of vertical guides 14a and 14b that run along the wall 10 and are associated at their upper ends with the plate 17 that mounts the carriage 8 and the guides 18 and 19.

Close to each guide 14a and 14b there is at least one actuating element 30, 31, acting on the plate 17 and integral with the wall 10 in such a way as to enable the plate 17 to be adjusted vertically in both directions (as clearly illustrated also in Figure 5).

In particular, but without limiting the scope of the claims, each guide 14a and 14b may be equipped with a pair of actuating elements 30, 31 positioned on opposite sides of, and associated with, the guide 14a and 14b, and acting with its stem on the plate 17.

Obviously, there may be more than two guides 14a, 14b, depending on the size and extent of the cutting unit 5, without thereby limiting the scope of the claims.

In view of the possibility of adjusting the carriage 8 in height (obviously within a certain operating range depending on the diameter of the blade and on the number and thickness of the panels), two wheels 23a, 23b are provided on opposite sides of the third pulley 23, for transmitting motion to the upper section 20a of the second belt 20 in such a way as to define the path of the belt 20 and keep the latter tensioned and in contact with the third pulley 23.

A panel saw machine made as described above thus achieves the above mentioned aims thanks to a structure for driving and adjusting the blade carriage made extremely simple and light.

This is made possible by the fact that the mobile parts of the blade unit consist of a simple carriage with the two blades on it and a plurality of belts and pulleys mounted on a plate equipped with slide guides and on which there is only the system for driving the carriage drive pulleys.

The rotational drive of the blades, on the other hand, is indirect, independent of the carriage and accomplished by a belt and by the blade transmission elements: that means the moving parts are lighter in weight and eliminates the need for electrical and air connections that move along with the carriage, with obvious advantages in terms of machine reliability and safety.

Moreover, the height adjustment of the blade is accomplished by guides located on the vertical wall and connected directly to the mounting plate which is thus able to slide in both directions to enable the blades to be correctly positioned in height.

This type of architecture, therefore, optimizes the cutting area, making it inexpensive and free of moving cables and conduits for the electrical and air systems and thus reducing maintenance requirements and times.

The machine described above is susceptible of industrial application and may be modified and adapted in several ways without thereby departing from the scope of the claims.

## Claims

1. A panel saw machine for panels (1) made of wood or similar materials, the panel saw machine (2) comprising at least:
- a horizontal table (3) for supporting the panels (1) ;
- means (4) for advancing the panels (1) along a feed line (A), said means (4) being mobile in a direction parallel to and along the horizontal table (3) ;
- a straight cutting unit (5) transversal to the feed line (A) and comprising at least one base (10), presser means (6) for holding down the panels (1), and a first saw blade (7) positioned close to the presser means (6), mobile in both directions and protruding lengthways from a slot made in the horizontal table (3) in such a such a way as to cut the panels (1) along a line (T) transversal to the feed line (A), the cutting unit (5) **comprising:**
- a carriage (8) which rotatably mounts the first blade (7) and which is **slidably constrained** to horizontal guide means (9) associated with the base (10);
- first means (11) for driving the carriage (8), designed to allow the carriage (8) to move in both directions along the transversal line (T);
- second means (12) for indirectly driving the first blade (7), mounted on the base (10) and kinematically connected, through first drive transmission means (13), to the first blade (7) in such a way as to enable the latter to rotate; the panel saw machine (2) being
**characterised in that** it further comprises means (14) for supporting and adjusting the height (H) of the blade (7) relative to the horizontal table (3), said means being positioned on the base (10) and acting on the horizontal guide means (9) in such a way as to vertically adjust the guide means (9) themselves and the carriage (8) in both directions.

2. The machine according to claim 1, **characterised in that** the carriage (8) has rotatably mounted on it a second blade (15), or scoring blade, positioned alongside the first, main blade (7), and connected to the second drive means (12) through second drive transmission means (16) in turn connected to the first drive transmission means (13) and mounted on the carriage (8).

3. The machine according to claim 1, **characterised in that** the guide means (9) comprise a horizontal plate (17) provided with a pair of horizontal guides (18, 19) to which the carriage (8) is slidably constrained.

4. The machine according to claim 1, **characterised in that** the first drive means comprise a pair of first pulleys (11a, 11b), mounted at the respective ends of the cutting unit (5) and rotatably constrained to a horizontal plate (17) forming part of the guide means (9); trained around the first pulleys (11a, 11b) there being a first endless belt (180) for driving the carriage (8) and associated, at its free ends, with the carriage (8) itself; the pulley (11a) being connected to a respective first drive unit (190).

5. The machine according to claim 1, **characterised in that** the second means (12) for driving the first blade (7) comprise a second drive unit (12m) associated with the base (10) and used to drive a second endless belt or cable (20) trained around at least one second pair of pulleys (21, 22) rotatably associated with the ends of the base (10) in such a way that the sections of the second belt (20) are positioned at least along the full extent of the cutting unit (5); the upper section (20a) of the second belt (20) being engaged with the first drive transmission means (13) positioned on the carriage (8) in order to drive the first blade (7) independently of the movement and position of the carriage (8) along the cutting unit (5).

6. The machine according to claim **5, characterised in that** the first drive transmission means (13) comprise at least one third pulley (23) which is rotatably associated with the carriage (8) and engaged by the upper section (20a) of the second belt (20); the third pulley (23) being coaxially keyed to one of a fourth pair of pulleys (24a, 24b) with a third endless belt (25) trained around them; the other fourth pulley (24a, 24b) being coaxially keyed to a shaft (26) that mounts the first blade (7) and rotationally drives the latter.

7. The machine according to claim **2, 5 and 6, characterised in that** the second drive transmission means (16) comprise a fourth endless belt (27) trained around a fifth pair of pulleys (27a, 27b), one of which is coaxially keyed to the second blade (15) and the other rotatably keyed to the carriage (8) in a position such that it engages, by means of a sixth pulley (28) coaxial with and connected to the fifth pulley (27a), a section of the third belt (25) that drives the first blade (7) in such a way as to simultaneously also rotate the second blade (16).

8. The machine according to claim **1, characterised in that** the means (14) for adjusting the height of the first blade (7) comprise at least one pair of vertical guides (14a, 14b) that run along the base (10) and are associated at their upper ends with a plate (17) that mounts the carriage (8) and the guides (9); close to each guide (14a, 14b) there being at least one actuating element (30, 31) acting on the plate (17) and integral with the base (10) in such a way as to enable the plate (17) to be adjusted vertically in both directions.

9. The machine according to claim **8, characterised in that** each guide (14a, 14b) is equipped with two actuating elements (30, 31) positioned on opposite sides of, and associated with, the guide (14a, 14b), and acting with their stems on the plate (17).

10. The machine according to claim **6, characterised in that** on opposite sides of the third pulley (23) there are two wheels (23a, 23b) for transmitting motion to the upper section (20a) of the second belt (20) in such a way as to define the path of the belt (20) and keep the latter tensioned and in contact with the third pulley (23).

## Patentansprüche

1. Plattenaufteilsäge für Platten (1) aus Holz oder ähnlichem Material, wobei die Plattenaufteilsäge (2) zumindest Folgendes beinhaltet:
- einen horizontalen Tisch (3) zur Auflage der Platten (1);
- Mittel (4) für die Zuführung der Platten (1) entlang einer Vorschublinie (A), wobei diese Mittel (4) in einer parallelen Richtung entlang des horizontalen Tisches (3) beweglich sind;
- eine gerade Schneideinheit (5), die quer zu der Vorschublinie (A) ausgerichtet ist und zumindest ein Grundgestell (10), Andrückmittel (6) zum Niederhalten der Platten (1) sowie ein erstes Sägeblatt (7) beinhaltet, das in der Nähe der Andrückmittel (6) angeordnet ist, in beiden Richtungen beweglich ist und in Längsrichtung aus einem im horizontalen Tisch (3) angefertigten Schlitz so hervorragt, dass es die Platten (1) entlang einer Linie (T) schneidet, die quer zu der Vorschublinie (A) verläuft, wobei die Schneideinheit (5) Folgendes beinhaltet:
- einen Wagen (8), auf dem drehbar das erste Sägeblatt (7) montiert ist und der gleitbar auf horizontalen Führungsmitteln (9) befestigt ist, die mit dem Grundgestell (10) verbunden sind;
- erste Mittel (11) für den Antrieb des Wagens (8), die dafür ausgelegt sind, die Bewegung des Wagens (8) in beiden Richtungen entlang der querverlaufenden Linie (T) zu ermöglichen;
- zweite Mittel (12) für den indirekten Antrieb des ersten Sägeblattes (7), die auf dem Grundgestell (10) montiert und kinematisch über erste Antriebsübertragungsmittel (13) mit dem ersten Sägeblatt (7) derart verbunden sind, dass sie dessen Drehung ermöglichen;
wobei die Plattenaufteilsäge (2) **dadurch gekennzeichnet ist, dass** sie ferner Mittel (14) zum Tragen und zum Einstellen der Höhe (H) des Sägeblattes (7) relativ zu dem horizontalen Tisch (3) beinhaltet, wobei diese Mittel auf dem Grundgestell (10) angeordnet sind und auf die horizontalen Führungsmittel (9) wirken, um die Regulierung der Führungsmittel (9) in vertikaler Richtung und die des Wagens (8) in beiden Richtungen vorzunehmen.

2. Maschine nach Anspruch 1, **dadurch gekennzeichnet, dass** auf dem Wagen (8) drehbar ein zweites Sägeblatt (15) oder Vorritzsägeblatt montiert ist, das längsseits des ersten Hauptsägeblattes (7) angeordnet ist und mit den zweiten Antriebsmitteln (12) über zweite Antriebsübertragungsmittel (16) verbunden ist, die ihrerseits mit den ersten Antriebsübertragungsmitteln (13) verbunden und auf dem Wagen (8) montiert sind.

3. Maschine nach Anspruch 1, **dadurch gekennzeichnet, dass** die Führungsmittel (9) eine horizontale Platte (17) beinhalten, die mit einem Paar horizontaler Führungen (18, 19) versehen ist, an denen der Wagen (8) gleitbar befestigt ist.

4. Maschine nach Anspruch 1, **dadurch gekennzeichnet, dass** die ersten Antriebsmittel ein Paar erster Riemenscheiben (11a, 11b) beinhalten, die an den jeweiligen Enden der Schneideinheit (5) montiert und drehbar mit einer horizontalen Platte (17) verbunden sind, die einen Teil der Führungsmittel (9) bildet; wobei ein erster Endlosriemen (180) für den Antrieb des Wagens (8) um die ersten Riemenscheiben (11a, 11b) gelegt ist und an seinen freien Enden mit dem Wagen (8) verbunden ist; wobei die Riemenscheibe (11a) mit einer entsprechenden ersten Antriebseinheit (190) verbunden ist.

5. Maschine nach Anspruch 1, **dadurch gekennzeichnet, dass** die zweiten Mittel (12) für den Antrieb des ersten Sägeblattes (7) eine zweite Antriebseinheit (12m) beinhalten, die mit dem Grundgestell (10) verbunden ist und für den Antrieb eines zweiten Endlosriemens oder Seiles (20) dient, der bzw. das um zumindest ein zweites Paar von Riemenscheiben (21, 22) gelegt ist, die drehbar mit den Enden des Grundgestells (10) derart verbunden sind, dass die Abschnitte des zweiten Riemens (20) zumindest entlang der gesamten Länge der Schneideinheit (5) angeordnet sind; wobei der obere Abschnitt (20a) des zweiten Riemens (20) in Eingriff mit den ersten Antriebsübertragungsmitteln (13) steht, die auf dem Wagen (8) angeordnet sind, um das erste Sägeblatt (7) unabhängig von der Bewegung und Position des Wagens (8) entlang der Schneideinheit (5) anzutreiben.

6. Maschine nach Anspruch 5, **dadurch gekennzeichnet, dass** die ersten Antriebsübertragungsmittel (13) zumindest eine dritte Riemenscheibe (23) beinhalten, die drehbar mit dem Wagen (8) verbunden ist und mit dem oberen Abschnitt (20a) des zweiten Riemens (20) in Eingriff steht; wobei die dritte Riemenscheibe (23) koaxial auf eine Riemenscheibe eines vierten Paares von Riemenscheiben (24a, 24b) gekeilt ist, um das ein dritter Endlosriemen (25) gelegt ist; während die andere vierte Riemenscheibe (24a, 24b) koaxial auf eine Welle (26) gekeilt ist, die das erste Sägeblatt (7) trägt und letztgenanntes drehend antreibt.

7. Maschine nach Anspruch 2, 5 und 6, **dadurch gekennzeichnet, dass** die zweiten Antriebsübertragungsmittel (16) einen vierten Endlosriemen (27) beinhalten, der um ein fünftes Paar von Riemenscheiben (27a, 27b) gelegt ist, von denen eine koaxial auf das zweite Sägeblatt (15) gekeilt ist und die andere in einer solchen Position drehbar auf den Wagen (8) gekeilt ist, dass sie, über eine sechste Riemenscheibe (28), die koaxial mit der fünften Riemenscheibe (27a) verbunden ist, mit einem Abschnitt des dritten Riemens (25) in Eingriff gelangt, der das erste Sägeblatt (7) antreibt, so dass gleichzeitig auch das zweite Sägeblatt (15) in Drehung versetzt wird.

8. Maschine nach Anspruch 1, **dadurch gekennzeichnet, dass** die Mittel (14) zur Einstellung der Höhe des ersten Sägeblattes (7) zumindest ein Paar vertikaler Führungen (14a, 14b) beinhalten, die entlang des Grundgestells (10) laufen und an ihren oberen Enden mit einer Platte (17) verbunden sind, auf der der Wagen (8) und die Führungen (9) montiert sind; wobei in der Nähe jeder Führung (14a, 14b) zumindest ein Betätigungselement (30, 31) vorhanden ist, das auf die Platte (17) wirkt und einteilig mit dem Grundgestell (10) ausgeführt ist, so dass es möglich ist, die Platte (17) vertikal in beiden Richtungen zu regulieren.

9. Maschine nach Anspruch 8, **dadurch gekennzeichnet, dass** jede Führung (14a, 14b) mit zwei Betätigungselementen (30, 31) ausgestattet ist, die auf entgegengesetzten Seiten der Führung (14a, 14b) angeordnet und mit dieser verbunden sind und die mit ihren Schäften auf die Platte (17) einwirken.

10. Maschine nach Anspruch 6, **dadurch gekennzeichnet, dass** auf entgegengesetzten Seiten der dritten Riemenscheibe (23) zwei Räder (23a, 23b) zur Übertragung der Bewegung an den oberen Abschnitt (20a) des zweiten Riemens (20) vorgesehen sind, um den Weg des Riemens (20) derart vorzugeben, dass letztgenannter gespannt und in Berührung mit der dritten Riemenscheibe (23) gehalten wird.

## Revendications

1. Une machine de sciage de panneaux pour des panneaux (1) en bois ou matériaux similaires, telle machine (2) de sciage de panneaux comprenant au moins :
- une table horizontale (3) pour le support des panneaux (1) ;
- des moyens (4) pour faire avancer les panneaux (1) le long d'une ligne d'alimentation (A), lesdits moyens (4) étant mobiles dans une direction parallèle à et le long de la table horizontale (3) ;
- une unité de coupe droite (5), transversale à la ligne d'alimentation (A) et comprenant au moins un bâti (10), des moyens presseurs (6) de retenue des panneaux (1), et une première lame de scie (7) positionnée à proximité des moyens presseurs (6), mobiles dans les deux sens et dépassant longitudinalement d'une fente pratiquée dans la table horizontale (3) de manière à couper les panneaux (1) le long d'une ligne (T) transversale à la ligne d'alimentation (A), l'unité de coupe (5) comprenant :
- un chariot (8) qui supporte de façon rotative la première lame (7) et qui est assujetti de façon coulissante à des moyens de guidage horizontal (9) associés au bâti (10) ;
- des premiers moyens (11) pour l'entraînement du chariot (8), destinés à permettre audit chariot (8) de se déplacer dans les deux directions le long de la ligne transversale (T) ;
- des deuxièmes moyens (12) pour l'entraînement indirect de la première lame (7), montés sur le bâti (10) et reliés cinématiquement, par l'intermédiaire de premiers moyens de transmission du mouvement (13), à la première lame (7) de manière à permettre à cette dernière de tourner ; la machine (2) de sciage de panneaux étant **caractérisée en ce qu'**elle comprend en outre des moyens (14) pour supporter et régler la hauteur (H) de la lame (7) par rapport à la table horizontale (3), lesdits moyens étant positionnés sur le bâti (10) et agissant sur les moyens de guidage horizontal (9) de manière à régler verticalement, dans les deux directions, les moyens de guidage (9) eux-mêmes et le chariot (8).

2. La machine selon la revendication 1, **caractérisée en ce que** le chariot (8) supporte de façon rotative une deuxième lame (15), ou lame d'incision, positionnée à côté de la première lame (7) principale et reliée aux deuxièmes moyens d'entraînement (12) par l'intermédiaire de deuxièmes moyens de transmission du mouvement (16) reliés à leur tour aux premiers moyens de transmission du mouvement (13) et montés sur le chariot (8).

3. La machine selon la revendication 1, **caractérisée en ce que** les moyens de guidage (9) comprennent une plaque horizontale (17) dotée d'une paire de guides horizontaux (18, 19) auxquels le chariot (8) est assujetti de façon coulissante.

4. La machine selon la revendication 1, **caractérisée en ce que** les premiers moyens d'entraînement comprennent une paire de premières poulies (11a, 11b), montées au niveau des extrémités respectives de l'unité de coupe (5) et assujetties de façon rotative à une plaque horizontale (17) faisant partie des moyens de guidage (9) ; une première courroie sans fin (180) étant enroulée en boucle autour des premières poulies (11a, 11b), pour l'entraînement du chariot (8), et étant associée, au niveau de ses extrémités libres, au chariot (8) lui-même ; la poulie (11a) étant reliée à une première unité d'entraînement (190) respective.

5. La machine selon la revendication 1, **caractérisée en ce que** les deuxièmes moyens (12) d'entraînement de la première lame (7) comprennent une deuxième unité d'entraînement (12m) associée au bâti (10) et utilisée pour entraîner une deuxième courroie sans fin ou câble (20) enroulé en boucle autour d'au moins une deuxième paire de poulies (21, 22) associées de façon rotative aux extrémités du bâti (10) de manière à ce que les sections de la deuxième courroie (20) soient positionnées au moins le long de tout le développement de l'unité de coupe (5) ; la section supérieure (20a) de la deuxième courroie (20) étant en prise avec les premiers moyens de transmission du mouvement (13) positionnés sur le chariot (8) afin d'entraîner la première lame (7) indépendamment du mouvement et de la position de ce même chariot (8) le long de l'unité de coupe (5).

6. La machine selon la revendication 5, **caractérisée en ce que** les premiers moyens de transmission du mouvement (13) comprennent au moins une troisième poulie (23) qui est associée de façon rotative au chariot (8) et assujettie par la section supérieure (20a) de la deuxième courroie (20) ; la troisième poulie (23) étant coaxialement calée sur une poulie d'une quatrième paire de poulies (24a, 24b) autour desquelles est enroulée en boucle une troisième courroie sans fin (25) ; l'autre quatrième poulie (24a, 24b) étant coaxialement calée sur un arbre (26) qui supporte la première lame (7) et met en rotation cette dernière.

7. La machine selon la revendication 2, 5 et 6, **caractérisée en ce que** les deuxièmes moyens de transmission du mouvement (16) comprennent une quatrième courroie sans fin (27) enroulée en boucle autour d'une cinquième paire de poulies (27a, 27b), dont une est coaxialement calée sur la deuxième lame (15) et l'autre est calée de façon rotative sur le chariot (8) dans une position telle qu'elle assujettit, par l'intermédiaire d'une sixième poulie (28) coaxiale à et associée à la cinquième poulie (27a), une section de la troisième courroie (25) d'entraînement de la première lame (7) de manière à faire également tourner simultanément la deuxième lame (15).

8. La machine selon la revendication 1, **caractérisée en ce que** les moyens (14) de réglage de la hauteur de la première lame (7) comprennent au moins une paire de guides verticaux (14a, 14b) qui se développent le long du bâti (10) et sont associés au niveau de leurs extrémités supérieures à une plaque (17) qui supporte le chariot (8) et les guides (9) ; au moins un élément d'actionnement (30, 31) étant prévu à proximité de chaque guide (14a, 14b), agissant sur ladite plaque (17) et faisant partie intégrante du bâti (10) de manière à permettre un réglage vertical, dans les deux directions, de la plaque (17).

9. La machine selon la revendication 8, **caractérisée en ce que** chaque guide (14a, 14b) est équipé de deux éléments d'actionnement (30, 31) positionnés sur des côtés opposés du guide (14a, 14b), associés à ce dernier et agissant avec leur tige respective sur la plaque (17).

10. La machine selon la revendication 6, **caractérisée en ce que**, sur des côtés opposés de la troisième poulie (23), deux roues (23a, 23b) sont prévues pour la transmission du mouvement à la section supérieure (20a) de la deuxième courroie (20), de manière à définir le parcours de la courroie (20) elle-même et à maintenir cette dernière tendue et en contact avec la troisième poulie (23).
